# EUROPÄISCHE PATENTSCHRIFT

(11) **EP 1 406 781 B1**
(45) Veröffentlichungstag und Bekanntmachung des Hinweises auf die Patenterteilung: **23.03.2005**
(21) Anmeldenummer: 02754250.5
(22) Anmeldetag: 21.06.2002
(51) Int. Cl.: B60K 15/035

(54) **KRAFTSTOFFBEHÄLTER**
FUEL TANK
RESERVOIR DE CARBURANT

(30) Priorität: 13.07.2001 DE 10133400
(43) Veröffentlichungstag der Anmeldung: 14.04.2004
(73) Patentinhaber: SIEMENS AKTIENGESELLSCHAFT, 80333 München (DE)
(72) Erfinder: GERHARDT, Marc, 44135 Dortmund (DE); ZAPP, Thomas, 44265 Dortmund (DE)
(86) Internationale Anmeldenummer: PCT/DE2002/002286
(87) Internationale Veröffentlichungsnummer: WO 2003/006273

(56) Entgegenhaltungen:
- WO-A-00/73644
- DE-A- 19 957 769
- FR-A- 2 774 950
- US-A- 4 852 761
- US-A- 4 919 103
- US-B1- 6 182 693
- US-B1- 6 250 081

## Beschreibung

Die Erfindung betrifft einen Kraftstoffbehälter für ein Kraftfahrzeug mit einer von einer Wandung begrenzten Kammer zur Aufnahme von Kraftstoff und mit einem zur Belüftung des oberhalb des Kraftstoffs befindlichen Bereichs der Kammer beim Tanken und/oder während des Betriebs vorgesehenen Aktivkohlefilter. Ein die Merkmale des Oberbegriffs des Anspruchs 1 zeigender Kraftstoffbehälter ist aus der US-B- 6 250 081 bekannt.

Solche Kraftstoffbehälter werden in heutigen Kraftfahrzeugen häufig eingesetzt und sind aus der Praxis bekannt. Der Aktivkohlefilter hat dabei ein aus den Kunststoffen Polyamid oder Polypropylen gefertigtes, teilweise mit Glasfasern verstärktes Gehäuse und ist über eine durch die Wandung des Kraftstoffbehälters geführte Leitung mit der Kammer verbunden.

Nachteilig bei dem bekannten Kraftstoffbehälter ist, dass durch die Anschlüsse des Kraftstoffbehälters und den Aktivkohlefilter Kraftstoffdämpfe, beispielsweise durch Leckage, Diffusion oder Permeation in die Umgebung entweichen können.

Der Erfindung liegt einerseits das Problem zugrunde, einen Kraftstoffbehälter der eingangs genannten Art so zu gestalten, dass ein Entweichen von Kraftstoff besonders zuverlässig verhindert wird.

Dieses Problem wird dadurch gelöst, dass das Aktivkohlefilter im Bereich der Kammer angeordnet ist.

Durch diese Gestaltung erfordert der erfindungsgemäße Kraftstoffbehälter keine Verbindungsleitungen der Kammer mit dem Aktivkohlefilter. Die Verbindung des Aktivkohlefilters mit der Kammer des Kraftstoffbehälters hat daher keinen Kontakt mit der Umgebung. Daher können bei einer Leckage oder durch Diffusion und Permeation an der Verbindung des Aktivkohlefilters mit der Kammer keine Kraftstoffdämpfe in die Umgebung gelangen. Ein Entweichen von Kraftstoff in die Umgebung wird durch den erfindungsgemäßen Kraftstoffbehälter besonders zuverlässig vermieden. Ein weiterer Vorteil des erfindungsgemäßen Kraftstoffbehälters besteht darin, dass er besonders kompakt ist und besonders wenige in dem Kraftfahrzeug zu montierende Bauteile hat. Der Aktivkohlefilter lässt sich zudem dank der Erfindung einfach in die vorgesehene Außenkontur des erfindungsgemäßen Kraftstoffbehälters integrieren.

Die bei heutigen Aktivkohlefiltern verwendeten Materialien des Gehäuses sind über lange Zeiträume bei Kontakt mit flüssigem Kraftstoff nicht kraftstofffest. Man könnte daher daran denken, das Gehäuse des innerhalb der Kammer befindlichen Aktivkohlefilters zu beschichten oder aus einem kraftstofffesten Material zu fertigen. Dies führt jedoch zu einer kostenintensiven Gestaltung des Aktivkohlefilters. Der erfindungsgemäße Aktivkohlefilter lässt sich auch besonders kostengünstig fertigen, wenn er innerhalb eines in der Kammer angeordneten Ausgleichsbehälters angeordnet ist. Durch diese Gestaltung wird der Aktivkohlefilter von dem Ausgleichsbehälter vor Kontakt mit flüssigem Kraftstoff geschützt.

Der erfindungsgemäße Kraftstoffbehälter gestaltet sich konstruktiv besonders einfach, wenn eine Wandung des Ausgleichsbehälters eine Ausformung zur Aufnahme des Aktivkohlefilters hat.

Eine Benetzung des Aktivkohlefilters mit Kraftstoff lässt sich gemäß einer anderen vorteilhaften Weiterbildung der Erfindung durch eine Befestigung des Ausgleichsbehälters und/oder des Aktivkohlefilters an der Innenseite der oberen Wandung des Kraftstoffbehälters besonders zuverlässig vermeiden.

Die Montage des Kraftstoffbehälters gestaltet sich durch die erfindungsgemäße Gestaltung des Ausgleichsbehälters und/oder des Aktivkohlefilters mit einem eine obere Wandung des Kraftstoffbehälters bildenden Schalenteil als vormontierbare bauliche Einheit besonders einfach.

Zur weiteren Vereinfachung der Montage des erfindungsgemäßen Kraftstoffbehälters trägt es bei, wenn Gehäuseteile des Aktivkohlefilters und/oder des Ausgleichsbehälters stoffschlüssig verbunden sind. Hierdurch lassen sich die Bauteile des Kraftstoffbehälters beispielsweise einfach verschweißen.

Die Anzahl von Verbindungsstellen zwischen dem Aktivkohlefilter und der Kammer lässt sich gemäß einer anderen vorteilhaften Weiterbildung der Erfindung besonders gering halten, wenn in Gehäuseteilen des Aktivkohlefilters und/oder des Ausgleichsbehälters Anschlüsse für in den Bereich oberhalb des Kraftstoff der Kammer geführte Entlüftungsleitungen angeordnet sind.

Die Kammer benötigt zum Druckausgleich eine über den Aktivkohlefilter in die Umgebung geführte Leitung. Ein Kontakt des in die Umgebung geführten Anschlusses der Leitung des Aktivkohlefilters mit flüssigem Kraftstoff lässt sich gemäß einer anderen vorteilhaften Weiterbildung der Erfindung besonders zuverlässig vermeiden, wenn eine zum Druckausgleich mit der Umgebung vorgesehene Entlüftungsleitung durch einen gemeinsamen Bereich der Wandung der Kammer und des Ausgleichsbehälters oder des Aktivkohlefilters geführt ist.

Zur weiteren Vereinfachung der Montage des Aktivkohlefilters im Ausgleichsbehälter trägt es gemäß einer anderen vorteilhaften Weiterbildung der Erfindung bei, wenn ein Gehäuseteil des Aktivkohlefilters einstückig mit dem Ausgleichsbehälter gefertigt ist. Hierdurch kann der Aktivkohlefilter bei der Montage mit Aktivkohle gefüllt, zugeschweißt und an das Entlüftungssystem angeschlossen werden. Letztlich wird der Ausgleichsbehälter zugeschweißt.

Zur weiteren Erhöhung der Sicherheit gegen ein Benetzen des Aktivkohlefilters trägt es gemäß einer anderen vorteilhaften Weiterbildung der Erfindung bei, wenn ein Gehäuse des Aktivkohlefilters doppelwandig gestaltet ist.

Zur weiteren Vereinfachung der Montage des Aktivkohlefilters trägt es gemäß einer anderen vorteilhaften Weiterbildung der Erfindung bei, wenn der Aktivkohlefilter eine in den Ausgleichsbehälter einsetzbare Patrone mit Aktivkohle hat.

Ein Anschluss des Aktivkohlefilters an das Entlüftungssystem des erfindungsgemäßen Kraftstoffbehälters erfordert einen besonders geringen Montageaufwand, wenn eine an dem Aktivkohlefilter anzuschließende Leitung einen Steckeranschluss aufweist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: schematisch einen erfindungsgemäßen Kraftstoffbehälter mit einem in einem Ausgleichsbehälter angeordneten Aktivkohlefilter,
- Fig.2: einen an einem oberen Schalenteil einer weiteren Ausführungsform des erfindungsgemäßen Kraftstoffbehälters befestigten Aktivkohlefilter,
- Fig.3: ein in einer Ausformung eines Ausgleichsbehälters angeordneten Aktivkohlefilter,
- Fig.4: einen in einem Bodenbereich eines Ausgleichsbehälters angeordneten Aktivkohlefilter.

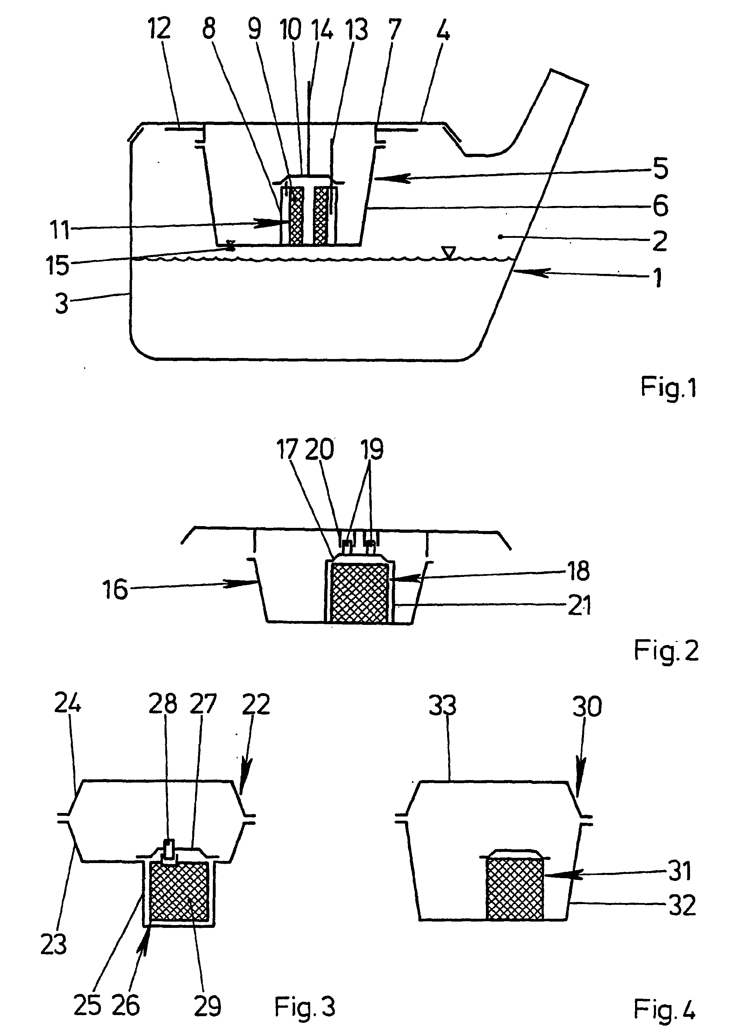

Figur 1 zeigt schematisch einen Kraftstoffbehälter 1 in einem Längsschnitt mit einer Kammer 2 zur Aufnahme von Kraftstoff und mit zwei Schalenteilen 3, 4. Ein in dem Kraftstoffbehälter 1 angeordneter Ausgleichsbehälter 5 hat ein topfförmig gestaltetes Gehäuseteil 6 und ist an dem oberen der Schalenteile 4 stoffschlüssig befestigt. Hierfür hat das obere Schalenteil 4 einen Rand 7. Der Bodenbereich des topfförmigen Gehäuseteils 6 des Ausgleichsbehälters 5 ist einstückig mit einem Gehäuseteil 8 eines Aktivkohlefilters 9 gefertigt. Das Gehäuseteil 8 ist stoffschlüssig mit einem Deckel 10 verbunden. Der Aktivkohlefilter 9 hat eine in das Gehäuseteil 8 eingesetzte Patrone 11 mit Aktivkohle. Selbstverständlich kann der Aktivkohlefilter 9 auch dadurch hergestellt werden, dass Aktivkohle in das Gehäuseteil 8 eingefüllt wird. Durch den oberen Rand 7 des Schalenteils 4 des Kraftstoffbehälters 1 sind Entlüftungsleitungen 12 in den Ausgleichsbehälter 5 geführt. Der Aktivkohlefilter 9 ist ebenfalls über eine Entlüftungsleitung 13 mit dem inneren Bereich des Ausgleichsbehälters 5 verbunden. Eine weitere Entlüftungsleitung 14 ist durch einen gemeinsamen Bereich der Wandung des Kraftstoffbehälters 1 mit dem Ausgleichsbehälter 5 in die Umgebung geführt. Hierdurch können beispielsweise bei einer Temperaturausdehnung des Kraftstoffs in der Kammer 2 Gase über die Entlüftungsleitungen 12 in den Ausgleichsbehälter 5 strömen und von dort aus durch den Aktivkohlefilter 9 in die Umgebung. Weiterhin ist im Bodenbereich des Ausgleichsbehälters 5 ein Bodenventil 15 angeordnet, welches sicherstellt, dass in den Ausgleichsbehälter 5 eingedrungener flüssiger Kraftstoff in die Kammer 2 zurückgeleitet wird. Durch seine Anordnung ist der Aktivkohlefilter 9 in dem Ausgleichsbehälter 5 weitgehend vor Kontakt mit flüssigem Kraftstoff geschützt.

Figur 2 zeigt einen Ausgleichsbehälter 16 für den Kraftstoffbehälter 1 aus Figur 1. Dieser unterscheidet sich von dem aus Figur 1 im Wesentlichen dadurch, dass ein Deckel 17 eines innerhalb des Ausgleichsbehälters 16 angeordneten Aktivkohlefilters 18 Anschlüsse 19 aufweist und mit im oberen Bereich der Wandung angeordneten Steckanschlüssen 20 verbunden ist. Der Aktivkohlefilter 18 hat zudem ein doppelwandiges Gehäuse 21.

In Figur 3 ist ein Ausgleichsbehälter 22 dargestellt, welcher zur Befestigung in einem nicht dargestellten Kraftstoffbehälter vorgesehen ist. Der Ausgleichsbehälter 22 hat zwei miteinander verschweißte Gehäuseteile 23, 24 und im Bodenbereich eine Ausformung 25 zur Aufnahme eines Aktivkohlefilters 26. Eine Trennwand 27 zur Abtrennung des Aktivkohlefilters 26 ist mit dem Bodenbereich des Ausgleichsbehälters 22 verschweißt. Durch die Trennwand 27 ist ein Anschluss 28 für eine Entlüftungsleitung geführt. Auch dieser Aktivkohlefilter 26 hat eine in die Ausformung 25 des Ausgleichsbehälters 22 eingesetzte Patrone 29.

Figur 4 zeigt einen konstruktiv besonders einfach aufgebauten Ausgleichsbehälter 30, bei dem ein Aktivkohlefilter 31 an dem unteren zweier Gehäuseteile 32, 33 des Ausgleichsbehälters 30 befestigt ist. An dem Ausgleichsbehälter 30 und dem Aktivkohlefilter 31 lassen sich nicht dargestellte Entlüftungsleitungen anschließen.

## Patentansprüche

1. Kraftstoffbehälter (1) für ein Kraftfahrzeug mit einer von einer Wandung begrenzten Kammer (2) zur Aufnahme von Kraftstoff und mit einem zur Belüftung des oberhalb des Kraftstoffs befindlichen Bereichs der Kammer (2) beim Tanken und/oder während des Betriebs vorgesehenen, mit der Umgebung in Verbindung stehenden Aktivkohlefilter (9, 18, 26, 31), wobei der Aktivkohlefilter (9, 18, 26, 31) im Bereich der Kammer (2) und innerhalb eines in der Kammer (2) angeordneten Ausgleichsbehälters (5, 16, 22, 30) angeordnet ist, **dadurch gekennzeichnet, dass** der Ausgleichsbehälter (5, 16, 22, 30) und/oder der Aktivkohlefilter (9, 18, 26, 31) mit einem eine obere Wandung des Kraftstoffbehälters (1) bildenden Schalenteil (4) als vormontierbare bauliche Einheit gestaltet ist.

2. Kraftstoffbehälter nach Anspruch 1, **dadurch gekennzeichnet, dass** eine Wandung des Ausgleichsbehälters (22) eine Ausformung (25) zur Aufnahme des Aktivkohlefilters (26) hat.

3. Kraftstoffbehälter nach Anspruch 1 oder 2, **gekennzeichnet durch** eine Befestigung des Ausgleichsbehälters (5, 16, 22, 30) und/oder des Aktivkohlefilters (9, 18, 26, 31) an der Innenseite der oberen Wandung des Kraftstoffbehälters (1).

4. Kraftstoffbehälter nach zumindest einem der vorhergehenden Ansprüche, **dadurch gekennzeichnet, dass** Gehäuseteile (6, 23, 24, 32, 33) des Aktivkohlefilters (9, 18, 26, 31) und/oder des Ausgleichsbehälters (5, 16, 22, 30) stoffschlüssig verbunden sind.

5. Kraftstoffbehälter nach zumindest einem der vorhergehenden Ansprüche, **dadurch gekennzeichnet, dass** in Gehäuseteilen (6, 23, 24, 32, 33) des Aktivkohlefilters (9, 18, 26, 31) und/oder des Ausgleichsbehälters (5, 16, 22, 30) Anschlüsse (19, 28) für in den Bereich oberhalb des Kraftstoffs der Kammer (2) geführte Entlüftungsleitungen (12, 13) angeordnet sind.

6. Kraftstoffbehälter nach zumindest einem der vorhergehenden Ansprüche, **dadurch gekennzeichnet, dass** eine zum Druckausgleich mit der Umgebung vorgesehene Entlüftungsleitung (14) durch eine gemeinsame Wandung der Kammer (2) und des Ausgleichsbehälters (5) oder des Aktivkohlefilters (9) geführt ist.

7. Kraftstoffbehälter nach zumindest einem der vorhergehenden Ansprüche, **dadurch gekennzeichnet, dass** ein Gehäuseteil (8, Gehäuse 21) des Aktivkohlefilters (9, 18, 26, 31) einstückig mit dem Ausgleichsbehälter (5, 16, 22, 30) gefertigt ist.

8. Kraftstoffbehälter nach zumindest einem der vorhergehenden Ansprüche, **dadurch gekennzeichnet, dass** ein Gehäuse (21) des Aktivkohlefilters (18) doppelwandig gestaltet ist.

9. Kraftstoffbehälter nach zumindest einem der vorhergehenden Ansprüche, **dadurch gekennzeichnet, dass** der Aktivkohlefilter (9, 26) eine in den Ausgleichsbehälter (5, 22) einsetzbare Patrone (11, 29) mit Aktivkohle hat.

10. Kraftstoffbehälter nach zumindest einem der vorhergehenden Ansprüche, **dadurch gekennzeichnet, dass** eine an dem Aktivkohlefilter (18) anzuschließende Leitung einen Steckeranschluss (20) aufweist.

## Claims

1. Fuel tank (1) for a motor vehicle, having a chamber (2) which is delimited by a wall and is used to hold fuel and having an activated carbon filter (9, 18, 26, 31) which is connected to the environment and is provided for the purpose of ventilating the area of the chamber (2) located above the fuel during refuelling and/or during operation, the activated carbon filter (9, 18, 26, 31) being arranged in the region of the chamber (2) and inside a compensation tank (5, 16, 22, 30) arranged in the chamber (2), **characterized in that** the compensation tank (5, 16, 22, 30) and/or the activated carbon filter (9, 18, 26, 31) is designed as a preassemblable structural unit with a shell part (4) which forms an upper wall of the fuel tank (1).

2. Fuel tank according to Claim 1, **characterized in that** a wall of the compensation tank (22) has a moulded formation (25) for holding the activated carbon filter (26) .

3. Fuel tank according to Claim 1 or 2, **characterized by** the compensation tank (5, 16, 22, 30) and/or the activated carbon filter (9, 18, 26, 31) being secured to the inner side of the upper wall of the fuel tank (1).

4. Fuel tank according to at least one of the preceding claims, **characterized in that** housing parts (6, 23, 24, 32, 33) of the activated carbon filter (9, 18, 26, 31) and/or of the compensation tank (5, 16, 22, 30) are joined by material-to-material bonding.

5. Fuel tank according to at least one of the preceding claims, **characterized in that** connections (19, 28) for vent lines (12, 13) which are guided in the region above the fuel in the chamber (2) are arranged in housing parts (6, 23, 24, 32, 33) of the activated carbon filter (9, 18, 26, 31) and/or of the compensation tank (5, 16, 22, 30).

6. Fuel tank according to at least one of the preceding claims, **characterized in that** a vent line (14) which is intended for pressure equalization with the environment is guided through a common region of the wall of the chamber (2) and of the compensation tank (5) or of the activated carbon filter (9).

7. Fuel tank according to at least one of the preceding claims, **characterized in that** a housing part (8, housing 21) of the activated carbon filter (9, 18, 26, 31) is produced integrally with the compensation tank (5, 16, 22, 30).

8. Fuel tank according to at least one of the preceding claims, **characterized in that** a housing (21) of the activated carbon filter (18) is of double-walled design.

9. Fuel tank according to at least one of the preceding claims, **characterized in that** the activated carbon filter (9, 26) has a cartridge (11, 29) comprising activated carbon which can be inserted into the compensation tank (5, 22).

10. Fuel tank according to at least one of the preceding claims, **characterized in that** a line which is to be connected to the activated carbon filter (18) has a plug connection part (20).

## Revendications

1. Réservoir à carburant (1) destiné à un véhicule automobile et comportant une chambre (2), limitée par une paroi et destinée à recevoir du carburant, et un filtre à charbon activé (9, 18, 26, 31 ), prévu pour aérer, lors du remplissage du réservoir et/ou pendant la marche, la région de la chambre (2) se trouvant au-dessus du carburant et qui est en liaison avec le milieu environnant, où le filtre à charbon activé (9, 18, 26, 31) est disposé dans la région de la chambre (2) et à l'intérieur d'un réservoir de compensation (5, 16, 22, 30) disposé dans la chambre ( 2), **caractérisé par le fait que** le réservoir de compensation (5, 16, 22, 30) et/ou le filtre à charbon activé (9, 18, 26, 31) sont conçus comme unité constructive préassemblée avec une coquille (4) formant une paroi supérieure du réservoir à carburant (1).

2. Réservoir à carburant selon la revendication 1 **caractérisé par le fait qu'**une paroi du réservoir de compensation (22) a une cavité (25) destinée à recevoir le filtre à charbon activé (26).

3. Réservoir à carburant selon la revendication 1 ou 2 **caractérisé par** une fixation du réservoir de compensation (5, 16, 22, 30) et/ou du filtre à charbon activé (9, 18, 26, 31) sur un côté intérieur de la paroi supérieure du réservoir à carburant (1).

4. Réservoir à carburant selon au m oins l'une d es revendications précédentes **caractérisé par le fait que** des pièces de l'enveloppe (6, 23, 24, 32, 33) du filtre à charbon activé (9, 18, 26, 31) et/ou du réservoir de compensation (5, 16, 22, 30) sont liées par assemblage homogène (même matière).

5. Réservoir à carburant selon au m oins l'une d es revendications précédentes **caractérisé par le fait que**, dans des pièces de l'enveloppe (6, 23, 24, 32, 33) du filtre à charbon activé (9, 18, 26, 31) et/ou du réservoir de compensation (5, 16, 22, 3 0), des raccordements (19, 28) sont prévus pour des conduites d'aération (12, 13) conduisant dans la zone de la chambre (2) se trouvant au-dessus du carburant.

6. Réservoir à carburant selon au m oins l'une d es revendications précédentes **caractérisé par le fait qu'**une conduite d'aération (14) prévue pour la compensation de pression avec le milieu environnant traverse une paroi commune de la chambre (2) et du réservoir de compensation (5) ou du filtre à charbon activé (9).

7. Réservoir à carburant selon au m oins l'une d es revendications précédentes **caractérisé par le fait qu'**une partie de l'enveloppe (8, enveloppe 21) du filtre à charbon activé (9, 18, 26, 31) est fabriquée en une seule pièce avec le réservoir de compensation (5, 16, 22, 30).

8. Réservoir à carburant selon au m oins l'une d es revendications précédentes **caractérisé par le fait qu'**une enveloppe (21) du filtre à charbon activé (18) est conçu à double paroi.

9. Réservoir à carburant selon au m oins l'une d es revendications précédentes **caractérisé par le fait que** le filtre à charbon activé (9, 26) a une cartouche (11, 29) de charbon activé mise en place dans le réservoir de compensation (5, 22).

10. Réservoir à carburant selon au m oins l'une d es revendications précédentes **caractérisé par le fait qu'**une conduite à raccorder au filtre à charbon activé (18) comporte un raccordement enfichable (20).
